# EUROPEAN PATENT APPLICATION

(11) **EP 1 440 858 A1**
(43) Date of publication of application: **28.07.2004**
(21) Application number: 03380010.3
(22) Date of filing: 27.01.2003
(51) Int. Cl.: B60T 7/06, B60T 15/04, G05G 1/14, F16C 11/06

(54) **System for connecting the push rod to the brake pedal of a vehicle**

(71) Applicant: Autotech Engineering, A.I.E., 48220 Abadino (Vizcaya) (ES)
(72) Inventor: Alapont Etxaniz, Inaki Joseba, 48220 Abadino (Vizcaya) (ES)
(74) Representative: Carpintero Lopez, Francisco

(57) **Abstract**

The system is based on the solid attachment of a reinforcement part (3) on the corresponding brake pedal (2) of a vehicle, the part (3) being provided with flexible lateral tongues (8) which determine grooves (9) on which a connection part (4) is positioned and is anchored after a 90° turn, over which is retained the ball (19) corresponding to the push rod (1) which connects the brake pedal (2) with the brake drum of the automobile. The connection part (4) is provided with an orifice (12) for passage of the ball (19) of the rod (1) and with elastic tabs (15), which retain said ball (19) once the orifice (12) has been passed, the ball (19) being positioned in a cap-shaped concavity (5) belonging to the reinforcement part (3). The 90° turn in either sense of the part (4) with respect to the part (3) allows the easy assembly and disassembly of the rod (1) and the separation of the brake pedal (2) from it to allow its interchangeability.

## Description

### OBJECT OF THE INVENTION

The present invention relates to a system for connecting the push rod to the brake pedal of a vehicle, based on the use of an intermediate part to which the push rod is fitted elastically, said intermediate part having means for its attachment on the brake pedal.

The object of the invention is to supply the automobile sector with a system by means of which the assembly and disassembly of the push rod with respect to the brake pedal is achieved in a very fast and simple way, without requiring complex manipulations or tools.

### BACKGROUND OF THE INVENTION

Between the brake pedal located in the interior of the vehicle, on which the driver's foot presses, and the brake cylinder located in the engine compartment there is a push rod which performs said operation when the brake pedal is depressed. To achieve a jointed union between the brake pedal itself and the push rod, the latter is generally provided on its end with a ball which fits, elastically, in a pan-shaped housing provided for this purpose on the brake pedal, in such a way that the connection is achieved by the simple pushing of the rod against the elastic means provided in said housing.

To this effect, various solutions are known allowing an elastic assembly of the push rod and the brake pedal, such as the device described in European Patent No 0148670, in which the brake pedal presents a pan-shaped housing aided by an elastic collar which holds the ball-shaped extremity of the push rod. The problem with this type of configuration is that the pan is obtained in the brake pedal itself, so that depending on the type of vehicle or the required braking forces, it may be necessary to configure a specific part or brake pedal for each case.

In European Patents No 0229350 and 0896162 solutions are proposed to solve the aforementioned problem which are based on providing an intermediate part which is attached to the brake pedal and which incorporates the elastic means to connect the ball to the push rod.

Specifically, in European Patent 0229350 the intermediate part is attached to the brake pedal by means of lateral tabs, which fit in windows provided on the pedal, said intermediate part not being detachable, so that when a repair is necessary, the disassembly of the brake pedal is very complicated.

European Patent 0896162 proposes a solution which has been conceived to allow the quick disassembly of the brake pedal, for which the elastic means are provided with an independent connecting part, which is assembled onto the intermediate part by means of tabs which allow disassembling the connecting part, along with the push rod, from the intermediate part, which remains fixed to the brake pedal. The connecting part is ring-shaped and has a radial opening that allows the subsequent extraction of the push rod.

### DESCRIPTIÓN OF THE INVENTION

In view of the state of the art defined in the previous section, the system of the invention is based on the premise that the attachment of the connecting part to the brake pedal is achieved by turning said connecting part one quarter of a revolution, thereby allowing a quick and simple attachment of the push rod to the brake pedal, and a disassembly which is just as simple, merely by reversing the quarter turn.

The connecting part presents a flat base, through which it remains abutted against the brake pedal under pressure, having extensions at the ends defining tabs of a sort meant to be housed, by the mere turn of the connecting part, in grooves which are provided on the brake pedal.

The base of the connecting part presents an opening for the passage of the push rod's ball that will remain housed in a cap-shaped protuberance provided in the brake pedal, the push rod being retained by the ball with elastic tabs belonging to the connecting part.

Elastic flaps are provided on the flat base of the connecting part acting as pressure elements between the connecting part and the brake pedal, thereby achieving a stable attachment between the two parts.
In this way, the assembly and disassembly is achieved with great ease and speed, as it will be sufficient to place the connecting part between the lateral wings of the brake pedal and turn the connecting part until its attachment tabs are housed in the grooves of the brake pedal.

The mounting of the push rod onto the connecting part is achieved beforehand by introducing the ball-shaped end through the orifice in the base of the connecting part, bending the elastic tabs provided for such purpose on said part; after having surpassed the ball these elastic tabs constitute the means of retention of the connecting part and thus of the push rod, in its hinged assembly between the brake pedal and the brake cylinder housed in the engine compartment.

For disassembly, it will suffice to turn the connecting part in the opposite direction until the connecting tabs are free with respect to the grooves of the brake pedal, allowing to separate the push rod once this is achieved from the connecting part.

To increase the sturdiness of the connection, the link between the connecting part and the brake pedal has been established by a U-shaped intermediate reinforcement part whose lateral wings externally embrace the brake pedal, being welded onto it, while its intermediate branch remains abutted beneath the brake pedal and presents, at its extremes, corresponding inferior attachment tongues placed in opposite directions and slightly displaced with respect to the medial branch of the reinforcement part, in such a way that they form corresponding grooves in which are housed the attachment tabs provided for this purpose in the connecting part. The intermediate branch incorporates a cap-shaped protuberance for housing the push rod.

Between the connecting part and the cap housing the ball of the push rod may be established an anti-friction bushing, formed by means of a hemispherical pan, made of plastic or similar material, provided with a flat peripheral wing, which is meant to reduce the wear and tear of the ball against the metal reinforcement part.

### DESCRIPTION OF THE DRAWINGS

The present description is complemented by a set of drawings of a preferred embodiment of the invention, in order to aid a better understanding of the characteristics of the invention, where for purposes of illustration only and in a non-limiting sense the following is shown:
Figure 1. Shows a side elevation view of the assembly of the push rod on the brake pedal of a vehicle, providing a lateral view of the metal reinforcement as well as the connecting part, which preferably will be made of plastic material.
Figure 2. Shows a longitudinal sectional view of the assembly of the previous figure, showing manner in which the ball provided on the end of the push rod is precisely placed and retained on the brake pedal.
Figure 3. Shows an exploded view of a portion of the brake pedal to which the reinforcement part is joined, with the connecting part and the optional anti-friction bushing being shown separated.
Figure 4. Shows a perspective view of the assembly of the previous figure in an assembled position.
Figure 5. Shows a general perspective view of the reinforcement part.

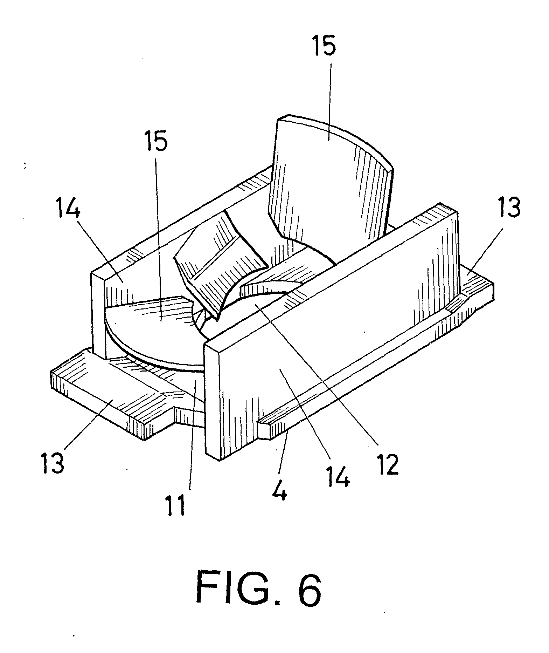

Figure 6. Shows, lastly, an additional perspective view of the connecting part, in this case of its bottom area.

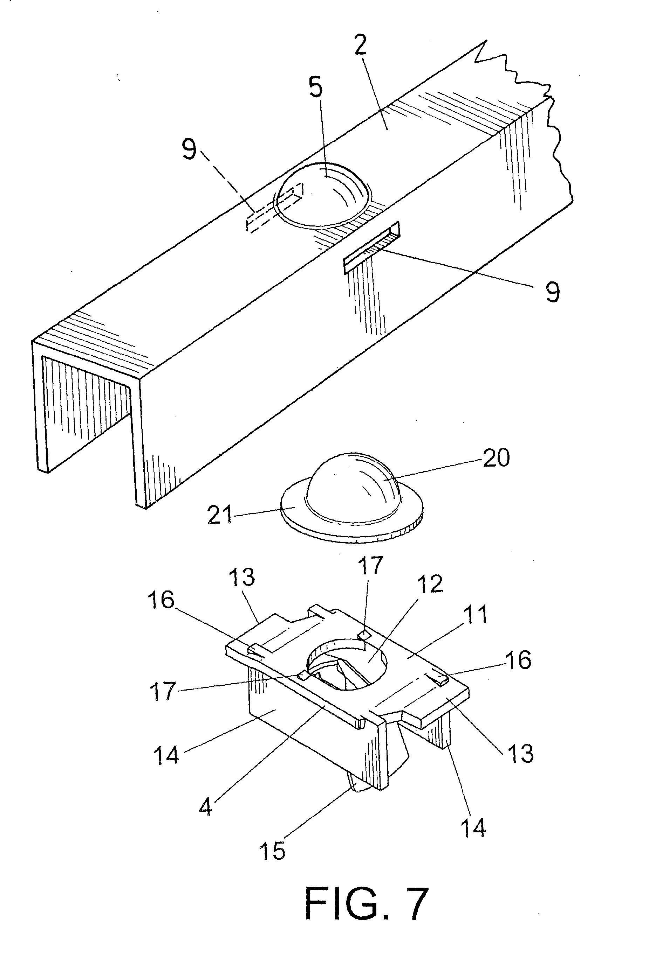

Figure 7. Shows a perspective view of the brake pedal with the grooves for assembling the connecting part and the cap for housing the push rod ball when the intermediate reinforcement part is not used.

### PREFERRED EMBODIMENT OF THE INVENTION

In view of the figures, the system for connecting the push rod (1) to the brake pedal (2) of a vehicle is achieved by means of a connecting part (4), which presents a flat base (11) having a orifice (12) and being provided at its ends with corresponding extensions (13) defining tabs for attachment and anchoring on grooves (9) established on the brake pedal (2).

From the internal face of the base (11) of the part (4) derive two parallel wings (14) escorting the orifice (12), between which are placed the elastic tabs (15) for attaching the ball-shaped end (19) of the push rod (1).

The base (11) of the connecting part (4) has, in addition, elastic flaps (16) which collaborate in the stable attachment of the said part (4) on the brake pedal (2), the base (11) being likewise provided with additional elastic flaps (17) which are manually actuated to bend the elastic tabs (15), as described hereinafter.

### With the described structure the assembly will be achieved as follows:

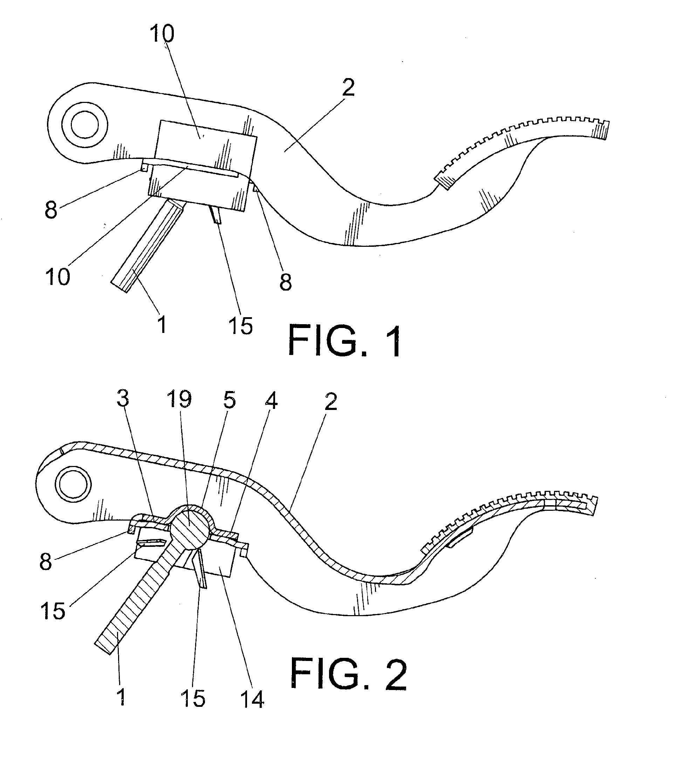

Firstly, the ball-shaped end (19) of the rod (1) is introduced through the orifice (12) of the connecting part (4), using sufficient pressure to achieve an elastic deformation of the tabs (15) of said part (4), until the ball (19) passes through the orifice (12) and positions itself in the cap-shaped pan (5) of the brake pedal (3), at which time the tabs (15) recover their position and retain the ball (19) as shown in figure 2.

Once the push rod has been attached to the connecting part, the latter is positioned beneath the brake pedal (2), and the connecting part is turned until the attachment tabs (13) are housed and remain anchored in the grooves (9) of the brake pedal, achieving the stabilization of the attachment by means of the flaps (16).

Disassembly will be achieved by turning the connecting part (4) in the opposite direction, so that the attachment tabs (13) are released from the grooves (9), thus freeing said part (4) along with the push rod (1) of the brake pedal (2), allowing the subsequent separation of said push rod (1) from the connecting part (4) by acting on the elastic flaps (17) so that the tabs (15) allow the exit of the ball (14) or its release from said connecting part (4).

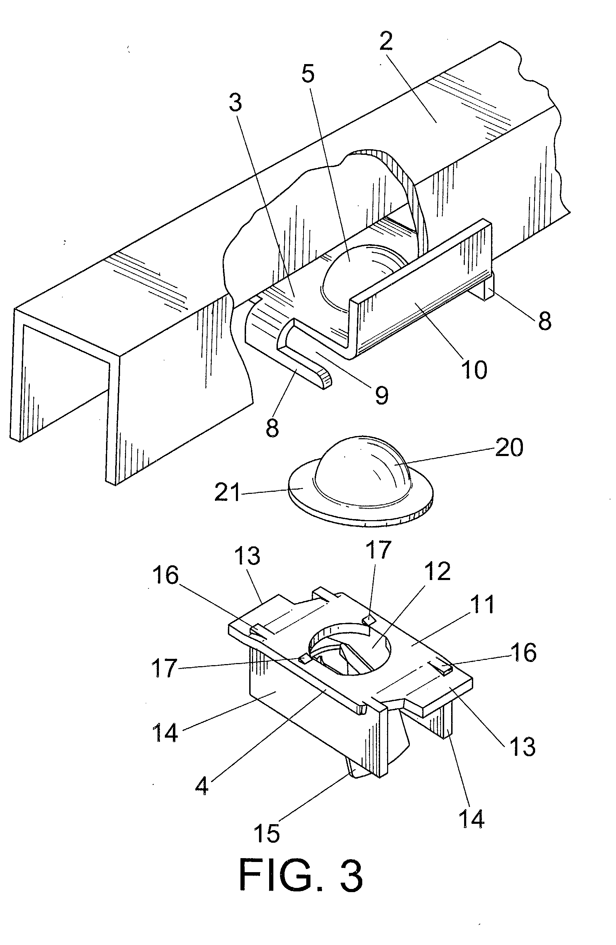

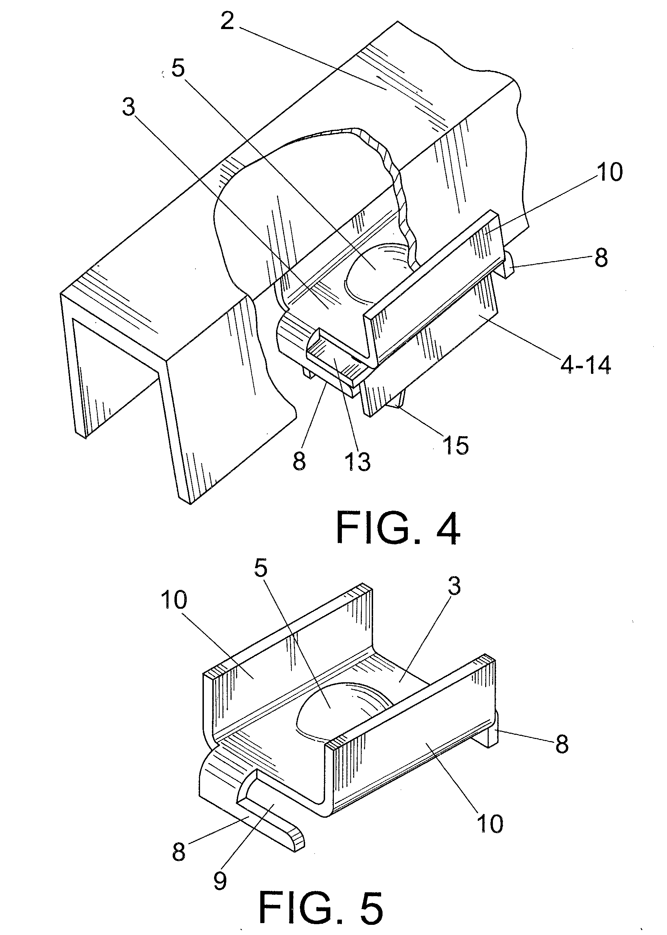

In a preferred embodiment, as shown in figures 1 to 5, a reinforcement part (3) is also used which is joined to the brake pedal (2) and is embodied as a "U"-shaped metal part, having two side branches (10) by which it is attached to the brake pedal (2) and an intermediate branch beneath which the connecting part (4) is fitted, said intermediate branch being provided with a cap (5) for housing the ball (19) of the push rod (1).

The intermediate branch presents lateral tongues (8) projecting in opposite directions and slightly displaced downwards with respect to the intermediate branch to define grooves (9) for assembling the connecting part (4).

Optionally, between the reinforcement part (3) and the connecting part (4) an anti-friction bushing (20) in the shape of a cap can be provided so that it adapts to the concavity of the configuration (5) of the part (3), in such a way that a ring-shaped wing complement (21) of said anti-friction cap (20) reduces the wear and tear of the ball (19) on the metal reinforcement part (3).

## Claims

1. System for connecting the push rod to the brake pedal of a vehicle, meant to allow a simple and quick assembly and disassembly of the push rod (1) with respect to the brake pedal (2), in which the push rod ends in a ball (19) which fits elastically in a connecting part which is either attached to the brake pedal directly or through an intermediate part (10), **characterised in that** the connecting part is provided with extensions at its ends (13) which define tabs to be positioned by means of a simple turn in grooves (9) provided on the brake pedal, the connecting part being provided with an orifice for passage of the ball (19) of the push rod (1), the latter being housed in a cap (5) provided on the brake pedal.

2. System for connecting the push rod to the brake pedal of a vehicle, according to claim 1, **characterised in that** the connecting part (4) presents a flat base (11), on which the orifice (12) is provided for passage of the ball (19) of the push rod (1), having two lateral wings (14) between which two flexible tongues (15) are provided for retaining the ball (19), so that end extensions (13) are provided in said rectangular base (11).

3. System for connecting the push rod to the brake pedal of a vehicle, according to previous claims **characterised in that** the base (11) of the connecting part (4) is provided with elastic flaps (16) that collaborate in the stable attachment of the connecting part (4).

4. System for connecting the push rod to the brake pedal of a vehicle, according to claim 1, **characterised in that** the connecting part (4) is mounted, by means of a simple turn, on an intermediate reinforcement part (3) which is integrally joined to the brake pedal and has a U-shaped configuration with lateral branches (10) that remain laterally abutted against the brake pedal (2), while its intermediate branch remains abutted beneath the brake pedal (2) and presents, at its extremities, corresponding lateral tongues (8), oriented in a position slightly displaced downwards with respect to the medial branch to determine corresponding grooves (9) for anchoring the end extensions (13) of the connecting part, such that the medial branch of the reinforcement part incorporates a cap-shaped protuberance (5) for housing the ball (19) of the push rod.

5. System for connecting the push rod to the brake pedal of a vehicle, according to previous claims, **characterised in that** between the connecting part (4) and the cap (5), an anti-friction bushing (20) is provided having a peripheral wing (21) to prevent the wear and tear of the ball (19).
